# EUROPEAN PATENT APPLICATION

(11) **EP 4 068 795 A1**
(43) Date of publication of application: **05.10.2022**
(21) Application number: 21209816.4
(22) Date of filing: 23.11.2021
(51) Int. Cl.: H04N 21/488, H04N 21/482, H04N 21/4788

(54) **METHOD AND APPARATUS FOR DISPLAYING MULTIMEDIA RESOURCES, DEVICE AND STORAGE MEDIUM**

(30) Priority: 31.03.2021 CN 202110347417
(71) Applicant: Beijing Dajia Internet Information Technology Co., Ltd., Beijing 100085 (CN)
(72) Inventor: Li, Yue, Beijing, 100085 (CN)
(74) Representative: Angerhausen, Christoph

(57) **Abstract**

The present disclosure relates to a method and apparatus for displaying multimedia resources, and a storage medium. The method includes: displaying (S201) an auxiliary interface in response to receiving a target multimedia resource message; obtaining (S202) playback data of the target multimedia resource, and playing the target multimedia resource on the auxiliary interface based on the playback data, in response to a trigger operation on the first interactive operation control; and/or displaying interactive feedback information associated with the second interactive operation control on the auxiliary interface in response to a trigger operation on the second interactive operation control. The present disclosure can realize the playback of multimedia resources and/or user interaction feedback on the auxiliary display interface, which improves the convenience of operation.

## Description

### FIELD

The present disclosure relates to computer technology, and in particular to a method and apparatus for displaying multimedia resources, a device and a storage medium.

### BACKGROUND

With the development of Internet technology, various applications (APP) can provide users with various media resources, such as videos (including short videos, etc.), audio, images, text, and the like. With the popularity of mobile devices, using mobile devices to view media resources such as short videos has become a part of people's daily lives. The applications can actively push messages of related media resources to the user.

### SUMMARY

The present disclosure provides a method and an apparatus for displaying multimedia resources, a device, and a storage medium, which solves the problem that the display content of the push message in the related technology is single, which cannot accurately and effectively reflect the related media resource, or complicated and low-efficiency related operations on the related media resources to some extent. The technical solutions of the present disclosure are described as follows.

According to embodiments of the present disclosure, there is provided a method for displaying multimedia resources. The method includes: displaying an auxiliary interface in response to receiving a target multimedia resource message, in which the auxiliary interface is independent from a main interface, and the auxiliary interface displays at least one of description information of a target multimedia resource, a first interactive operation control for playback controlling and a second interactive operation control for interactive feedback; obtaining playback data of the target multimedia resource, and playing the target multimedia resource on the auxiliary interface based on the playback data, in response to a trigger operation on the first interactive operation control; and/or displaying interactive feedback information associated with the second interactive operation control on the auxiliary interface in response to a trigger operation on the second interactive operation control.

In some embodiments, the method includes: creating the first interactive operation control based on a first preset surface view control, in which the first preset surface view control is embedded with a first object for caching related playback data; and creating the second interactive operation control based on a second preset surface view control, in which the second preset surface view control is embedded with a second object for caching related interaction feedback information.

In some embodiments, the method includes: obtaining the playback data of the target multimedia resource in response to detecting that a preset playback permission is enabled.

In some embodiments, the method includes: playing the target multimedia resource based on the playback data through a playback peripheral.

In some embodiments, a display range of the auxiliary interface is variable.

In some embodiments, the method includes: invoking a playback data display interface associated with the auxiliary interface, wherein a dependence of the playback data display interface on an operating environment is lower than a dependence of the auxiliary interface on the operating environment; playing the target multimedia resource on the playback data display interface based on the playback data.

In some embodiments, the auxiliary interface further displays a third interactive operation control indicating an appointment reminder, and the method includes: presenting a time selection interface for making an appointment reminder for a live broadcast corresponding to the target multimedia resource in response to a trigger operation of the third interactive operation control indicating the appointment reminder; determining a selected time as a target time in response to triggering a selection operation on the time selection interface; receiving a reminder notification for the live broadcast at the target time.

In some embodiments, the method includes: determining candidate multimedia resources which are not yet played from a local cache; determining the target multimedia resource among the candidate multimedia resources according to multimedia resource preference information of the target object; generating the target multimedia resource message using information corresponding to the target multimedia resource.

In some embodiments, the method includes: receiving the target multimedia resource message sent by a server, in which the target multimedia resource message is selected and sent by the server based on identification information of a target object.

In some embodiments, displaying the auxiliary interface includes: displaying a cover image indicating the target multimedia resource in a first area of the auxiliary interface, wherein the cover image is one of a static image and a dynamic image; displaying the first interactive operation control indicating playback controlling in a second area of the auxiliary interface, and adjusting a display transparency of the first interactive operation control; in which the first area and the second area are at least partially overlapped in response to the display transparency adjusted meeting a preset transparency threshold.

According to the embodiments of the present disclosure, there is provided an apparatus for displaying multimedia resources. The apparatus includes: a displaying unit, configured to display an auxiliary interface in response to receiving a target multimedia resource message, in which the auxiliary interface is independent from a main interface, and the auxiliary interface displays at least one of description information of a target multimedia resource, a first interactive operation control for playback controlling and a second interactive operation control for interactive feedback; a triggering unit, configured to obtain playback data of the target multimedia resource, and play the target multimedia resource on the auxiliary interface based on the playback data, in response to a trigger operation on the first interactive operation control; and/or to display interactive feedback information associated with the second interactive operation control on the auxiliary interface in response to a trigger operation on the second interactive operation control.

In some embodiments, the apparatus includes: a first interactive operation control creation unit, configured to create the first interactive operation control based on a first preset surface view control, in which the first preset surface view control is embedded with a first object for caching related playback data; and a second interactive operation control creation unit, configured to create the second interaction operation control based on a second preset surface view control, in which the second preset surface view control is embedded with a second object for caching related interaction feedback information.

According to embodiments of the present disclosure, an electronic device is provided. The electronic device includes: a processor; a memory for storing instructions executable by the processor; in which the processor is configured to execute the instructions to implement the method for displaying multimedia resources according to embodiments of the present disclosure.

According to embodiments of the present disclosure, a computer-readable storage medium is provided. When instructions stored in the computer-readable storage medium are executed by a processor of an electronic device, the electronic device is caused to execute a method of displaying multimedia resources according to embodiments of the present disclosure.

According to embodiments of the present disclosure, a computer program product is provided. The computer program product has instructions stored thereon, in which when the instructions are executed by a processor of an electronic device, the electronic device is caused to execute the method for displaying multimedia resources according to embodiments of the present disclosure.

The technical solutions provided by the embodiments of the present disclosure at least bring the following beneficial effects.

An auxiliary display interface is displayed in response to receiving a target multimedia resource message, playback data of the target multimedia resource may be obtained in response to a trigger operation on the first type of interactive operation control, and the target multimedia resource is played on the auxiliary display interface based on the playback data; and/or interactive feedback information associated with the second type of interactive operation control is displayed on the auxiliary display interface in response to a trigger operation on the second type of interactive operation control, in which the auxiliary display interface is independent of a main interface, and the auxiliary display interface also includes the description information of the target multimedia resource. The above technical solutions may achieve the playback of the multimedia resources and/or user interactive feedback on the auxiliary display interface, which can greatly improve the convenience of operating the multimedia resources, and can help users quickly understand the multimedia resources. In this way, it is convenient for the user to view the multimedia resources of interest in time and output interactive feedback for the multimedia resources, thereby improving the effectiveness of multimedia resource display, and at the same time, it can also increase the user's viscosity in using relevant multimedia resource applications.

It should be understood that the above general description and the following detailed description are only exemplary and explanatory, and cannot limit the disclosure. The following will describe embodiments of the present disclosure, but it should be appreciated that various modifications of the invention are possible without departing from the basic principles described herein. The scope of the present disclosure is therefore to be determined solely by the appended claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure, and do not constitute an improper limitation of the present disclosure.
Fig. 1 is an architecture diagram of a system applying a method for displaying multimedia resources according to an exemplary embodiment.
Fig. 2 is a flowchart showing a method for displaying multimedia resources according to an exemplary embodiment.
Fig. 3 is a flowchart of playing multimedia resources according to an exemplary embodiment.
Fig. 4 is a flowchart showing an appointment reminder for a multimedia resource message according to an exemplary embodiment.
Fig. 5 is a flowchart of playing multimedia resources according to an exemplary embodiment.
Fig. 6 is a schematic diagram showing an auxiliary interface according to an exemplary embodiment.
Fig. 7 is a schematic diagram showing an auxiliary interface according to an exemplary embodiment.
Fig. 8 is a schematic diagram showing an auxiliary interface according to an exemplary embodiment.
Fig. 9 is a schematic diagram showing an auxiliary interface according to an exemplary embodiment.
Fig. 10 is a block diagram showing an apparatus for displaying multimedia resources according to an exemplary embodiment.
Fig. 11 is a block diagram showing an electronic device according to an exemplary embodiment.

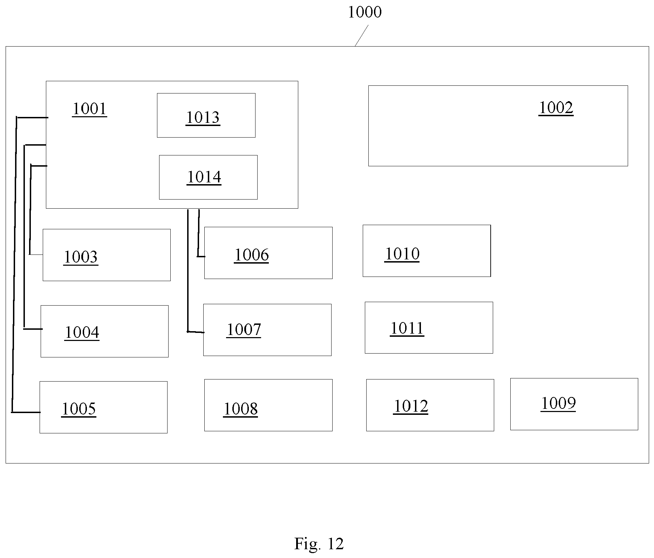

Fig. 12 is a block diagram showing another apparatus for displaying multimedia resources according to an exemplary embodiment.

### DETAILED DESCRIPTION

In order to enable those skilled in the art to understand the technical solutions of the present disclosure, reference will be made clearly and completely technical solutions in the embodiments of the present disclosure with accompanying drawings.

It should be noted that terms "first" and "second" in the specification and claims of the present disclosure and the accompanying drawings are used to distinguish similar objects, rather than to describe a specific order or sequence. It should be understood that data used in such a manner may be interchanged under appropriate circumstances so that embodiments of the present disclosure described herein may be implemented in a sequence other than the sequence illustrated or described herein. The implementations described in the following exemplary embodiments do not represent all implementations consistent with the present disclosure; instead, the implementations described in the following exemplary embodiments are merely examples of an apparatus and method consistent with the attached claims and some aspects of the present disclosure.

In the related arts, the pushed messages often focus on the title and introduction of the related media resources, and the user needs to click the control corresponding to the message to enter the display page of the related media resources in the application, and then view the specific content of the related media resources. The above-mentioned related technical solutions have problems that the display content of the pushed message is relatively single, which cannot accurately and effectively reflect the related media resources, or complicated and low-efficiency related operations on the related media resources.

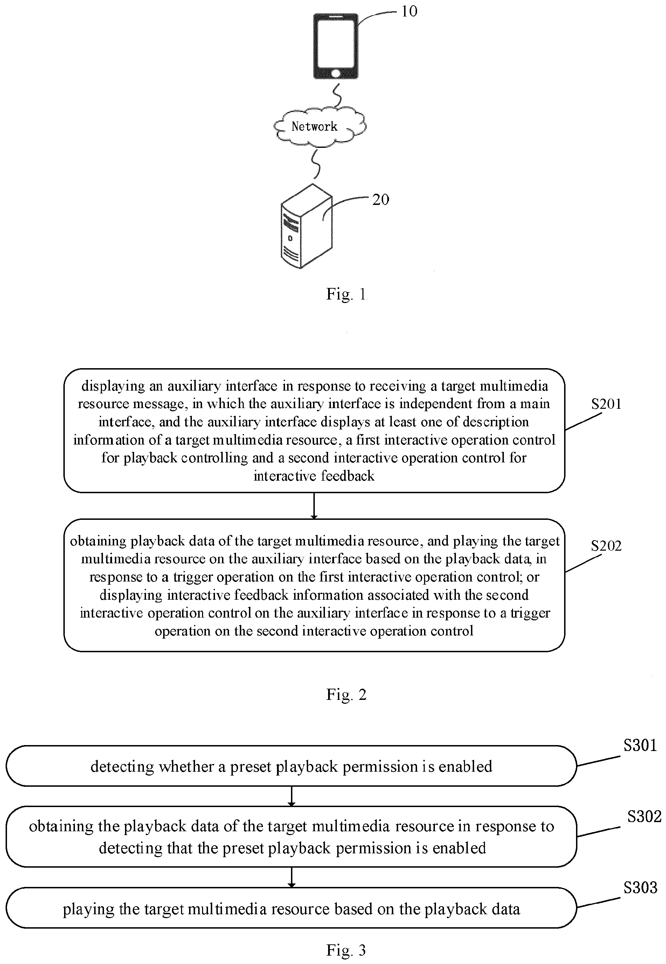

Fig. 1 is an architecture diagram of a system using a method for displaying multimedia resources according to an exemplary embodiment. Referring to Fig. 1, the architecture diagram may include a client 10 and a server 20.

The client 10 may be, but is not limited to, a physical device such as a smart phone, a tablet computer, a notebook computer, a desktop computer, a smart speaker, a smart wearable device, a digital assistant, an augmented reality device, a virtual reality device, etc., or one or more applications running on the physical device. Embodiments of client 10 further include electronic devices having a user interface, may be equipped with an operating system that supports running multimedia resource applications, and is operable to communicate with server 20 through a network by wired or wireless means.

The server 20 may provide the client 10 with background services such as corresponding playback data according to the user's current trigger operation, such that the client 10 may obtain the playback data and display it; and/or, the server 20 may provide the client 10 with the corresponding playback data according to the user's current trigger operation. The terminal 10 provides background services such as corresponding interactive feedback information, such that the client 10 obtains and displays the interactive feedback information. For example, the server 20 may be, but not limited to, one or more of an independent server, or a server cluster or a distributed system including multiple physical servers, or it may provide cloud services, cloud databases, cloud computing, cloud functions, and cloud storage, network services, cloud communications, middleware services, domain name services, security services, and cloud servers for basic cloud computing services such as big data and artificial intelligence platforms. The client 10 and the server 20 may be directly or indirectly connected through a network by wired or wireless communication, which is not limited in the embodiments of the present disclosure.

The method for displaying multimedia resources provided by the embodiments of the present disclosure may be executed by an apparatus for displaying multimedia resources. The apparatus for displaying multimedia resources may be integrated in a terminal and other electronic equipment in the form of hardware or software, or can be implemented by a terminal alone, or can be implemented by a terminal and a server in cooperation.

Fig. 2 is a flowchart showing a method for displaying multimedia resources according to an exemplary embodiment. As shown in Fig. 2, the method for displaying multimedia resources can be applied to an electronic device. As an example, the method includes:

S201, displaying an auxiliary interface in response to receiving a target multimedia resource message, in which the auxiliary interface is independent from a main interface, and the auxiliary interface displays at least one of description information of a target multimedia resource, a first interactive operation control for playback controlling and a second interactive operation control for interactive feedback.

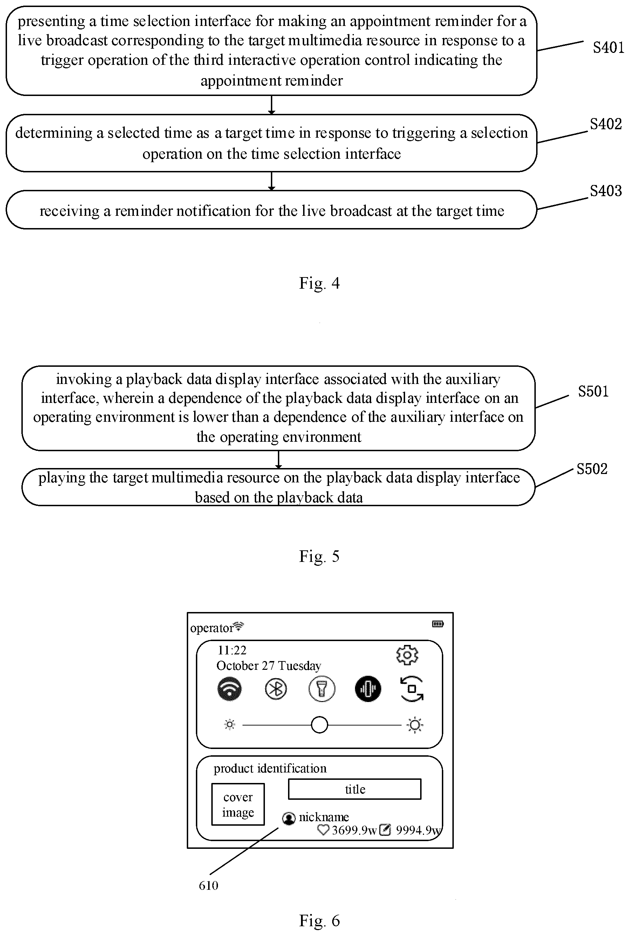

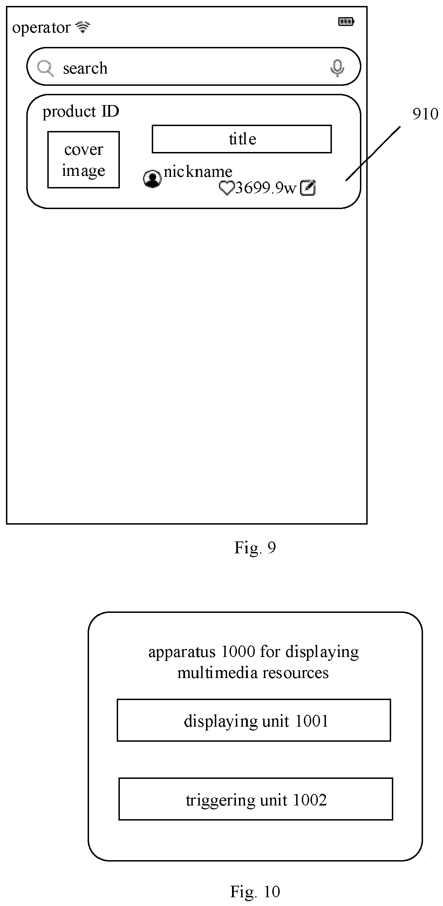

In embodiments of the present disclosure, the target multimedia resource message may be a notification to push the target multimedia resource. The multimedia resources may include, but are not limited to, short videos, long videos, live videos, animations, graphics and texts, etc. The auxiliary interface is different from a main (screen) interface of the physical device or the main interface of the application. The auxiliary interface is independent from the main interface. The auxiliary interface may be used as an interface style for presenting target multimedia resource messages, such as notification bars and pop-up windows, or suspended windows, etc. The interface style used by the auxiliary interface may be set differently according to the current application usage. For example, when the application is in the state of switching to the background, the interface style used by the auxiliary interface can be a notification bar (see Fig. 6). When the application is currently in use, the interface style used by the auxiliary interface can be a pop-up window 910 (see Fig. 9). The description information of the target multimedia resource displayed on the auxiliary interface may include, but is not limited to, at least one or a nickname of a publishing user, an avatar of the publishing user, a title of a target multimedia resource, an introduction of the target multimedia resource, a tag of the target multimedia resource, and a cover image of the target multimedia resource, user feedback statistics of the target multimedia resource (such as the number of likes, the number of comments, and the number of shares). One or more first interactive operation controls for play controlling displayed on the auxiliary interface can realize play controlling of the target multimedia resource (for example, start to play, pause to play). One or more second interactive operation controls for interactive feedback displayed on the auxiliary interface can realize user interactive feedback for the target multimedia resource, such as outputting likes, comments, forwards, favorites, and reports for target multimedia resources, and viewing likes, comments, forwards, favorites, and reports for target multimedia resources.

In practical applications, the multimedia resources can be works published on the application platform by professional users, ordinary users, etc. The target multimedia resource is used as a multimedia resource that needs to be recommended to the target object (registered user or tourist user), and the target object can view the description information of the target multimedia resource displayed on the auxiliary interface through the client, the interactive operation control for the playback control and/or the interactive operation control for the interactive feedback, and then the playback and/or user interaction feedback for the target multimedia resource can be realized through the interactive operation control.

In an exemplary embodiment, before displaying the auxiliary interface, the method also includes generating or receiving the target multimedia resource message. The process of generating the target multimedia resource message and receiving the target multimedia resource message will be respectively introduced below.

1) The process of generating the target multimedia resource message includes: firstly, determining candidate multimedia resources which are not yet played from a local cache; then, determining the target multimedia resource among the candidate multimedia resources according to multimedia resource preference information of the target object; generating the target multimedia resource message using information corresponding to the target multimedia resource.

The client usually preloads a certain amount of multimedia resources and stores them in the local cache of the physical device, so as to quickly respond to the display request of the multimedia resources. The target multimedia resource may be determined from the local cache in combination with a recommendation strategy, and then the target multimedia resource message can be generated. The multimedia resources that have been played in the local cache can be excluded first, and the multimedia resources which have not been played can be used as candidate multimedia resources; then the target multimedia resources can be determined from the candidate multimedia resources according to the multimedia resource preference information of the target object; and then the target multimedia resource message may be generated using information corresponding to the target multimedia resource. When determining the target multimedia resource based on the multimedia resource preference information, a machine learning model pointing to the target object may be used for calculation. The information corresponding to the target multimedia resource may include the above-mentioned description information of the target multimedia resource, push notification preference information of the target object, and so on. The information corresponding to the target multimedia resource may come from the local cache, or via an interaction with the server. Here, the target multimedia resource message generated based on the local cache will be notified and displayed by the client under a certain product strategy.

The target multimedia resource comes from the multimedia resources which have not been played in the local cache, and has attributes that the target object wants to view but has not yet viewed. Based on the multimedia resource preference information, it is ensured that the target multimedia resource is the one that satisfies the preference requirements of the target object among the multimedia resources that have not been cached locally. Correspondingly, the target multimedia resource message corresponding to the target multimedia resource can dig out more interesting multimedia resources for the user and improve the user experience.

2) Receiving the target multimedia resource message includes: receiving the target multimedia resource message sent by the server; in which the target multimedia resource message is selected and sent by the server based on the identification information of the target object.

The server may send deviceID (device identification), userID (registered user identification), a registration ID (identification) of a third-party pushsdk (push software development kit) or IMEI (International Mobile Equipment Identity) to a specific object or to a group. The target multimedia resource message sent by the server is for the target multimedia resource. When sending for a specific object, the target multimedia resource selected by the server can be determined based on the recommendation strategy corresponding to the specific object; when sending for a group, the target multimedia resources selected by the server can be determined based on a recommendation strategy corresponding to similar objects. The target multimedia resource message may include all target multimedia resource information, or may only include key information of the target multimedia resource (required information can be extracted subsequently by interacting with the server by means of the key information). The target multimedia resource message corresponding to the target multimedia resource can dig out more multimedia resources interested for the user, thus improving the user experience.

In an exemplary embodiment, when the description information of the target multimedia resource displayed on the auxiliary interface includes a cover image of the target multimedia resource, the process of displaying the auxiliary interface includes the following steps: first, displaying a cover image indicating the target multimedia resource in a first area of the auxiliary interface, in which the cover image is one of a static image and a dynamic image; then, displaying the first interactive operation control for playback controlling in a second area of the auxiliary interface, and adjusting a display transparency of the first interactive operation control; and then, controlling the first area and the second area to be at least partially overlapped in response to the adjusted display transparency meeting a preset transparency threshold.

When the adjusted display transparency meets the preset transparency threshold, the first area for displaying the cover image and the second area for displaying the first interactive operation controls at least partially overlap, so that the first interactive operation control in the second area does not affect the visual display of the cover image in the overlapped portion corresponding to the first area, and the visually associated position setting of the first interactive operation control and the cover image is also convenient to guide the user to better control the playback. The dynamic image used as the cover can be taken from the key images of the target multimedia resources. If the target multimedia resource is a film and television work, the dynamic image used as the cover can be generated from multiple key frame screenshots of the film and television work. Of course, the first interactive operation control for playback controlling may also be set near a title of the target multimedia resource.

Exemplarily, the first layer where the first area is located is located below the second layer where the second area is located. In the first state, the display transparency of the first interactive operation control for the playback control is greater than or equal to the first preset. Set a transparency threshold (for example, any value from 75% to 80%). At this time, the target object can view at least partially overlapping cover images and the first interactive operation control on the auxiliary interface through the client. When the cover image is a dynamic image, the first interactive operation control does not affect the viewing of the dynamic change of the cover image in the relevant overlapped part. In a second state, the display transparency of the first interactive operation control for the playback controlling is greater than or equal to the second preset transparency threshold (for example, any value from 95% to 100%). At this time, the target object has performed the trigger operation on the first interactive operation control, the display content of the second area can be switched from the cover image to the playback content of the multimedia resource, and the target object can view through the client that there is at least partially overlapped playback content and the first interactive operation control, or can view only the playing content of the multimedia resource being played on the auxiliary interface (the first interactive operation control is hidden and does not appear).

The auxiliary interface will be further introduced below. The process of generating the auxiliary interface may include: first, obtaining a preset interface frame (UI frame), in which the preset interface frame includes at least one interface element; and then, determining a state value of the interface element based on the target multimedia resource message; furthermore, rendering the preset interface frame based on the state value of the interface element to obtain the auxiliary interface.

The client sets the following two settings for receiving the multimedia resource message as a notification for pushing multimedia resources. One is a notification UI frame (that is, the aforementioned preset interface frame), and the other is a notification view controller. The notification UI frame, as a module for interface display of notifications, includes a system default interface style, basic components and extended components that are provided to users for interface customization. The extended component includes a surface view (SurfaceView) control that can be used for multimedia resource playback, and a button that can be used for multimedia resource playback. The notification view controller is regarded as a module for operation callbacks to the notification UI frame. The items of the operation callbacks may include, but are not limited to: 1) a callback in response to receiving a multimedia resource message; 2) a callback in response to the user clicking on a custom operation button of a multimedia resource message; 3) controlling on the interface display of a multimedia resource message, such as canceling the display; 4) initiating an application. These components provided to users for interface customization may include a remote view (RemoteViews) controls, which can be used to develop interfaces that include title elements, brief introductions, images, operation buttons, and video playback controls. It should be noted that the video playback module includes related components can encode and decode audio and video, and play/pause audio and video.

Referring to Figs. 6-9, the preset interface frame can include a first interface element indicating a cover image, and the cover image of the target multimedia resource may be determined directly or indirectly based on the target multimedia resource message, and then the cover image can be used to determine a state value of the first interface element. The first interface element indicating the cover image may be an image view (ImageView) control. The preset interface frame may include a second interface element indicating a title, and a title address of the target multimedia resource (such as a uniform resource locator of the title) may be determined directly or indirectly based on the target multimedia resource message, and then the title address may be used to determine the state value of the second interface element. The preset interface frame can include a third interface element that instructs to publish user information, and can directly or indirectly determine an avatar address of a user identification (ID) of the publishing user based on the target multimedia resource message (such as the uniform resource locator of the avatar), and then use the user identification and avatar address to determine the state value of the third interface element. The preset interface frame may include a fourth interface element indicating statistical items of user interaction feedback, and may directly or indirectly determine user interaction feedback statistical data based on the target multimedia resource message (for example, the number of likes, the number of comments, the number of shares, etc. which are obtained through interaction with the server based on a multimedia resource identification carried by the target multimedia resource message), and then the statistical data of the user interaction feedback is used to determine the state value of the fourth interface element. Based on the state values of the above interface elements, the preset interface frame is rendered to obtain the auxiliary interface. The obtained auxiliary interface may display a cover image of the target multimedia resource, a title of the target multimedia resource, a nickname of the publishing user, and an avatar of the publishing user, a user feedback statistics item of the target multimedia resource.

Of course, the interface elements can also include interactive operation controls that indicate a playback control, an interactive operation control that indicate an appointment reminder, an interactive operation control that indicate likes, an interactive operation control that indicate comments, an interactive operation control that indicate forwarding, and an interactive operation control that indicate progress adjustment, etc. In practical applications, in response to the trigger operation of the interactive operation control indicating likes, a red heart indicating "like" may light up, and the information on the number of likes plus 1 is sent back to the server, and the number of likes corresponding to the aforementioned fourth interface element is updated based on the interaction with the server. In response to the triggering operation of the interactive operation control indicating the forwarding, the address of the multimedia resource (such as a uniform resource locator of the multimedia resource) is obtained, and the application applicable for forwarding on the physical device is invoked based on the user's selection, so as to forward the address of the multimedia resource to the physical device. The user's trigger operation on the interactive operation control indicating comments may be inputting a comment in an input box, and the client sends the comment information back to the server in response to the operation.

A display range of the auxiliary interface is variable. After the trigger operation for the interactive operation control, the display range of the auxiliary interface can be maintained unchanged (that is, the auxiliary interface is resident), and the interactive result can be displayed on the auxiliary interface with the same display range; the display range of the auxiliary interface relative to the display range of the main interface can also be reduced (that is, the auxiliary interface disappears or the auxiliary interface is folded).

In an exemplary embodiment, before displaying an auxiliary interface in response to receiving the target multimedia resource message, the method may include: 1) determining a first preset surface view control, in which the first preset surface view control is embedded with a first object for caching related playback data; and creating the first interactive operation control based on the first preset surface view control; 2) determining a second preset surface view control, in which the second preset surface view control is embedded with a second object for caching related interaction feedback information; and creating the second interactive operation control based on the second preset surface view control.

The surface view (SurfaceView) control is a subclass of View. The surface view control is embedded with a corresponding Surface object when it is created. The Surface object can be used as a logical entity for managing content data to be displayed. When constructing the first interactive operation control for playback controlling, a first preset surface view control is used, and the embedded first object has the function of caching related playback data. After receiving the trigger operation, the first interactive operation control refreshes the relevant playback data in the first object by using the functional properties of the surface view control to display the relevant multimedia resources through the first preset surface view control. When constructing the second interactive operation control for interactive feedback, the second preset surface view control is used, and the embedded second object has the function of caching relevant interactive feedback information. After receiving the trigger operation, the second interactive operation control refreshes the relevant interactive feedback information in the second object by using the functional properties of the surface view control to display through the second preset surface view control.

In an exemplary embodiment, as shown in Fig. 3, after the auxiliary interface is displayed, the method further includes:
S301, detecting whether a preset playback permission is enabled;
S302, obtaining the playback data of the target multimedia resource in response to detecting that the preset playback permission is enabled;
S303, playing the target multimedia resource based on the playback data.

The preset playback permission may be a preset audio and video playback permission. When detecting whether the preset playback permission is enabled, it can be detected whether a system has enabled a readable switch of the auxiliary interface (such as a notification bar), or it can be detected whether a corresponding application has enabled the readable switch of contents on the auxiliary interface (such as a notification bar). When it is detected that the preset playback permission is enabled, playback data of the target multimedia resource may be directly or indirectly obtained based on the target multimedia resource message. If the target multimedia resource is a local resource, a local storage path of the target multimedia resource can be determined based on the target multimedia resource message, and then the playback data can be obtained through the local storage path. If the target multimedia resource is an online resource, information on a source address (such as a network download address) of the target multimedia resource can be determined based on the target multimedia resource message, and then the playback data can be obtained through interaction with the server. Of course, the identification of the target multimedia resource can also be determined based on the target multimedia resource message, and then the playback data can be obtained by interacting with the server based on the identification of the target multimedia resource.

The target multimedia resource may be played after the playback data is obtained. Considering the strategy for acquiring the playback data, the above steps S302 and S303 may be executed for one or more times. For example, in combination with the current network environment, the playback data is acquired in a form of fragments, then the first playback data corresponding to the first 10 seconds of the target video can be acquired first, and then the first 10 seconds of content can be played based on the first playback data. At the same time, the second playback data corresponding to the 11th-20th second of the target video can be obtained, and then the content at the 11th-20th second is played based on the second playback data, and so on.

When the playback permission is enabled, playing related multimedia resources for the received target multimedia resource messages can improve the display efficiency of the multimedia resources. Enabling the playback permissions indicates to a certain extent that the user is in an environment where it is convenient to use hearing to learn multimedia resources, which can simplify user operations, and users do not need to view the display content of the auxiliary interface and click on related controls.

Exemplarily, in the case of whether there are audio and video playback peripherals with a connection relationship, the detection can be performed when it is detected that the preset playback permission is enabled. The audio and video playback peripherals may include, but are not limited to, Bluetooth headsets, speaker devices, and video playback devices (such as smart TVs). When the presence of audio and video playback peripherals is detected, the playback data of the target multimedia resource is obtained, and then the playback data is sent to the audio and video playback peripherals, so that the audio and video playback peripherals can play the target multimedia resources based on the playback data, for example, in a form of a projection screen. For the acquisition of the playback data and the setting of the playback of the target multimedia resource, please refer to the above relevant description. In a case that there is an audio and video playback peripheral with a connection relationship, the audio and video playback peripheral will play the target multimedia resource. The existence of the audio and video playback peripheral with the connection relationship, to a certain extent, indicates that the user is in an environment where the audio and video playback peripherals are used to learn multimedia resources. This can simplify user operations, and the user do not need to view the display content of the auxiliary interface and to click related controls.

In an exemplary embodiment, when the number of the target multimedia resource messages is at least two, each of the target multimedia resource messages is displayed on the auxiliary interface in the form of a card component, and display items of each card include description information of the corresponding target multimedia resource and the first interactive operation control for playback controlling; after displaying the display auxiliary interface, the method also includes: switching the target multimedia resource message displayed in the auxiliary interface in response to a sliding operation on a card component list; in which, the card component list is obtained by arranging the card components corresponding to the target multimedia resource messages, and a sliding direction of the sliding operation is same as an arrangement direction of the card components.

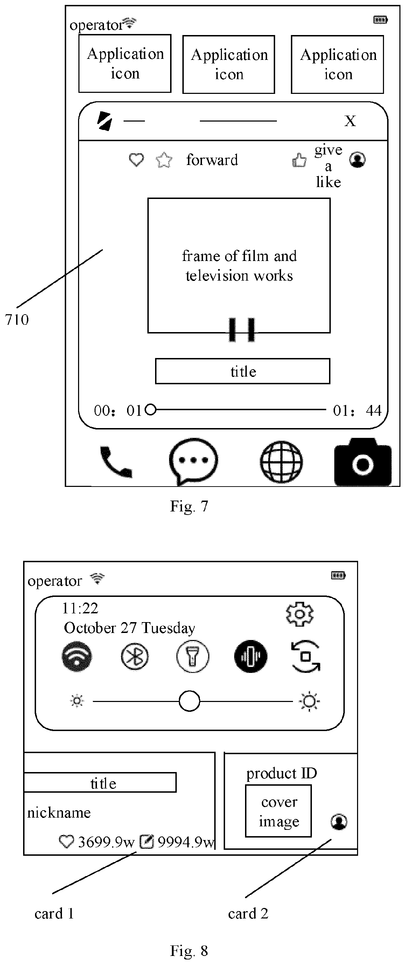

As shown in Fig. 8, when the number of target multimedia resource messages is at least two, the display form of each target multimedia resource message on the auxiliary interface is in a form of a card component, and card components (shown in Fig. 8 as card 1 and card 2) corresponding to the target multimedia resource messages are arranged in sequence to form a card component list, which is presented on the auxiliary interface. The arrangement direction of each card component can be horizontal or vertical, and other arrangement directions suitable for display can also be used, which is not specifically limited. The display item of each card component includes the description information of the corresponding target multimedia resource and the first interactive operation control for the playback controlling. For the description information of the target multimedia resource and the definition of related interactive operation controls, please refer to the above relevant description, which will not be elaborated herein.

The sliding operation of the target object on the card component list is received, and the sliding direction of the sliding operation is the same as the arrangement direction of each card component, for example, both are in a horizontal direction. Then the target multimedia resource message displayed on the auxiliary interface may be switched. For example, the arrangement direction of the card components in the card component list presented on the auxiliary interface is the horizontal direction, card components 1 (corresponding to the target Multimedia resource message 1), card component 2 (corresponding to target multimedia resource message 2), card component 3 (corresponding to target multimedia resource message 3), and card component 4 (corresponding to target multimedia resource message 4) are arranged in sequence from left to right. In order to ensure the application performance of the auxiliary interface, a size of a user-visible area of the auxiliary interface is often set based on the presentation of a target multimedia resource message. Correspondingly, the size of the user-visible area of the auxiliary interface has a one-to-one correspondence with the card component corresponding to the target multimedia resource message. Therefore, for the user-visible area of the auxiliary interface with a size smaller than a size of the card component list, if the user-visible area presents the card component 2 (corresponding to the target multimedia resource message 2) before the sliding operation, after the sliding operation from right to left, the user-visible area presents the card component 4 (corresponding to the target multimedia resource message 4). During the sliding operation, as the sliding distance increases, a binding relationship between the user-visible area and the card component 2 is first released, and the card component 2 is gradually hidden through a fade-out animation; then the card component 3 is gradually displayed through a fade-in animation; finally, the card component 4 is presented in the user-visible area in a form of a fade-in animation and a binding relationship between the card component 4 and the user-visible area is established. When the user-visible area establishes a binding relationship with a certain card component, the target object may trigger the respective interactive operation controls displayed on the card component.

Presentation of more than two target multimedia resource messages on the auxiliary interface may be realized in a form of a card component list, and the display switching between different target multimedia resource messages may be realized by sliding operation, which can improve the display efficiency of more than two target multimedia resource messages. Compared with a form in which a target multimedia resource message is presented by an auxiliary interface, the user interface can be optimized and it is convenient for users to view related multimedia resource messages.

In an exemplary embodiment, as shown in Fig. 4, the display items of the auxiliary interface further include a third interactive operation control indicating an appointment reminder. After displaying the auxiliary interface, the method further includes:
S401, presenting a time selection interface for making an appointment reminder for a live broadcast corresponding to the target multimedia resource in response to a trigger operation of the third interactive operation control indicating the appointment reminder;
S402, determining a selected time as a target time in response to triggering a selection operation on the time selection interface;
S403, receiving a reminder notification for the live broadcast at the target time.

For a live broadcast scenario, the target multimedia resource may be a live broadcast preview, and the target multimedia resource message may be a notification pushed for the live broadcast preview. The server sends the target multimedia resource message to the client before the official start time of the live broadcast. Based on the information indicating the live broadcast preview in the target multimedia resource message, the client generates and displays the auxiliary interface including the third interactive operation control indicating the appointment reminder. After receiving the trigger operation of the target object, a time selection interface for reminding a live broadcast appointment is presented. A target time can be determined using the time selection interface for the following situations: 1) The time selection interface comes from a calendar, an alarm clock and other applications that can be scheduled to remind the physical device invoked by the client, and then the target time can be selected by the target object; 2) The time selection interface comes from an appointment reminder application of the client itself, such that the target time can be selected by the target object. Of course, the target time can be the time specified by the target object earlier than the official start time of the live broadcast, or a default target time after the target object confirms that an appointment reminder is required (for example, 5 minutes or 10 minutes before the official start time of the live broadcast). For the former, after step S402, the method may also include switching and displaying the time selection interface as a scheduled reminder control. For the latter, the third interactive operation control indicating an appointment reminder may be switched and displayed as a scheduled reminder control in response to a trigger operation on the third interactive operation control indicating an appointment reminder.

A reminder notification for the live broadcast is received at the target time (close to the official start time of the live broadcast). The reminder notification can be displayed on the auxiliary interface. The reminder notification can stay (including staying in a way of reducing the display range) for a preset time period until the live broadcast starts (for example, 1 minute). Correspondingly, the user may enter into the live broadcast page and wait for the start of the live broadcast or watch the live broadcast by triggering the interactive operation control that instructs to watch the live broadcast on the auxiliary interface; or the page of waiting for the start of the live broadcast or the live broadcast page may be represented on the auxiliary interface by triggering the interactive operation control that instructs to watch the live broadcast.

For live broadcast scenes, adding the third interactive operation control indicating an appointment reminder to the auxiliary interface can facilitate the user to make an appointment of a live broadcast. There is no need to enter the relevant live page of the application to complete the appointment, which can reduce the switching steps from the auxiliary interface to the relevant live page and reduce the consumption of computing resources.

The method also includes S202, obtaining playback data of the target multimedia resource, and playing the target multimedia resource on the auxiliary interface based on the playback data, in response to a trigger operation on the first interactive operation control; and/or displaying interactive feedback information associated with the second interactive operation control on the auxiliary interface in response to a trigger operation on the second interactive operation control.

(1) Regarding the triggering of the first interactive operation control, the playback data of the target multimedia resource can be directly or indirectly obtained based on the target multimedia resource message. If the target multimedia resource is a local resource, the local storage path of the target multimedia resource can be determined based on the target multimedia resource message, and then the playback data can be obtained through the local storage path. If the target multimedia resource is an online resource, the source address information (such as a network download address) of the target multimedia resource can be determined based on the target multimedia resource message, and then the playback data can be obtained through interaction with the server. Of course, the identification of the target multimedia resource can also be determined based on the target multimedia resource message, and then the playback data can be obtained by interacting with the server based on the identification of the target multimedia resource.

The playback data can be used to display the target multimedia resources on the auxiliary interface, and there is no need to enter the relevant playback page of the application to display the target multimedia resources. Of course, the target multimedia resources may be viewed by entering the relevant playback page of the application.

After the playback data is obtained, the target multimedia resource can be played. Taking into account the strategy for acquiring the playback data, the above steps S202 and S203 may be executed one or more times. For example, in combination with the current network environment, the playback data is acquired in a form of fragments, then first playback data corresponding to the first 10 seconds of the target video can be acquired first, and then the first 10 seconds of content can be played based on the first playback data. At the same time, the second playback data corresponding to the 11th-20th second of the target video can be obtained, and then the 11-20th second content is played based on the second playback data, and so on.

Exemplarily, the playback data may indicate a key content of the target multimedia resource (such as a climax part of a certain film and a television work), and the key content of the target multimedia resource is played on the auxiliary interface. At this time, the display items of the auxiliary interface also include the interactive operation control indicating to enter a normal playback mode. In response to the target object's triggering operation of the interactive operation control indicating to enter the normal playback mode, the relevant playback page of the application is entered and the target multimedia resource may be played in the normal mode.

In an exemplary embodiment, as shown in Fig. 5, playing the target multimedia resource may include:
S501, invoking a playback data display interface associated with the auxiliary interface, in which a dependence of the playback data display interface on an operating environment is lower than a dependence of the auxiliary interface on the operating environment;
S502, playing the target multimedia resource on the playback data display interface based on the playback data.

A dependence of the playback data display interface on an operating environment is lower than a dependence of the auxiliary interface on the operating environment. Presenting the target multimedia resources by invoking the relevant playback data display interface may reduce the overhead of running resources and ensure the reliability and stability of system performance. In practical applications, for example, the interface style used in the auxiliary interface is a notification bar 610 (see Fig. 6), and the interface style used in the playback data display interface is a lighter floating window 710 (see Fig. 7). When the target multimedia resource is played, the floating window can be used to play the target multimedia resource in a small window mode.

In an exemplary embodiment, playing the target multimedia resource on the auxiliary interface based on the playback data includes: reducing a display range of the auxiliary interface relative to the main interface; playing the target multimedia resource on the auxiliary interface after the display range is reduced based on the playback data.

Regarding playing the target multimedia resource, the display range of the auxiliary interface is variable and can be adjusted as needed: 1) When a visual guidance requirement of the target multimedia resource is greater than or equal to an auditory guidance requirement, the display range of the auxiliary interface can be maintained unchanged, and the target multimedia resource may be played in the auxiliary interface with the unchanged display range (that is, the auxiliary interface is resident and displays real-time playback pages), or the display range of the auxiliary interface is expanded relative to the main interface, and the target multimedia resource is played on the auxiliary interface after the display range is expanded; 2) When the visual guidance requirement of the target multimedia resource is less than the auditory guidance requirement, the display range of the auxiliary interface is reduced relative to the main interface, and the target multimedia resource is played on the auxiliary interface after the display range is reduced (that is, the auxiliary interface disappears, and the audio is continuous outputted; or, the auxiliary interface is folded to only show that a certain application is playing, and the audio is continuously outputted). As a result, the flexibility of playing the target multimedia resource with the aid of the auxiliary interface can be improved.

(2) Regarding triggering of the second interactive operation control, the second interactive operation control can be an interactive operation control that indicates likes, an interactive operation control that indicates comments, an interactive operation control that indicates forwarding, an interactive operation control that indicates favorites, an interactive operation control that indicates reports, etc. Exemplarily, the interactive operation control indicating comments may further include an interactive operation control indicating a comment input and an interactive operation control indicating a review of comments.

The interactive feedback information associated with the second interactive operation controls can be the complete content or a part of content of the interactive feedback information currently input by the target object, the real-time interactive feedback information that the target object currently expects to view, or the real-time interactive feedback statistical information that the target object currently expects to view.

Exemplarily, 1) for the complete content or a part of content of the interactive feedback information currently input by the target object, the user can input a comment by triggering the second interactive operation control, so that the complete comments or partial comments displayed on the auxiliary interface can be viewed. The user can give a like by performing a trigger operation on the second interactive operation control, so that the user can view a "red heart", "+1" and other interface element changes or additions that indicate the completion of giving a like displayed on the auxiliary interface. 2) For the real-time interactive feedback information that the target object currently expects to view, the user can view the real-time comments displayed on the auxiliary interface by reviewing the trigger operation of the second interactive operation control. The real-time comment here indicates a comment on the target multimedia resource as of the current time, and does not limit the display logic of the comment on the auxiliary interface (such as a timeline logic and a popularity logic). 3) For the real-time interactive feedback statistical information that the target object currently expects to view, the user can like the trigger operation of the second interactive operation control, so that the number of likes in real time displayed on the auxiliary interface can be viewed. The number of likes in real time here indicates the number of likes for the target multimedia resource as of the current time.

The method for displaying multimedia resources provided in the above embodiments can realize the playback of multimedia resources and/or user interaction feedback on the auxiliary interface, providing a more flexible and vivid method for displaying multimedia resources, which can greatly improve the multimedia resources. The convenience of resource operation can attract users to click and help users quickly understand multimedia resources. This makes it easy for users to view the multimedia resources of interest in time and output interactive feedback for the multimedia resources, thereby improving the effectiveness of multimedia resource display, and at the same time, the user's viscosity of the relevant multimedia resource applications and the user retention rate may be improved.

Fig. 10 is a block diagram showing an apparatus 1000 for displaying multimedia resources according to an exemplary embodiment. Referring to Fig. 10, the apparatus includes a displaying unit 1001 and a triggering unit 1002.

The displaying unit 1001 is configured to display an auxiliary interface in response to receiving a target multimedia resource message, in which the auxiliary interface is independent from a main interface, and the auxiliary interface displays at least one of description information of a target multimedia resource, a first interactive operation control for playback controlling and a second interactive operation control for interactive feedback.

The triggering unit 1002 is configured to obtain playback data of the target multimedia resource, and playing the target multimedia resource on the auxiliary interface based on the playback data, in response to a trigger operation on the first interactive operation control; or display interactive feedback information associated with the second interactive operation control on the auxiliary interface in response to a trigger operation on the second interactive operation control.

In an exemplary embodiment, the apparatus also includes: a first interactive operation control creation unit, configured to create the first interactive operation control based on a first preset surface view control, in which the first preset surface view control is embedded with a first object for caching related playback data; a second interactive operation control creation unit, configured to create the second interaction operation control based on a second preset surface view control, in which the second preset surface view control is embedded with a second object for caching related interaction feedback information.

In an exemplary embodiment, the apparatus also includes: a playback data obtaining unit, configured to obtain the playback data of the target multimedia resource in response to detecting that a preset playback permission is enabled. In particular, the apparatus includes a permission detecting unit, configured to detect whether the preset playback permission is enabled; and a first resource playing unit, configured to play the target multimedia resource based on the playback data.

In an exemplary embodiment, the playback data obtaining unit includes: a resource playing subunit, configured to play the target multimedia resource based on the playback data through a playback peripheral. In particular, the apparatus includes: a peripheral detecting unit, configured to detect whether there is an audio and video playback peripheral with a connection relationship in response to detecting that the preset playback permission is enabled; a playback data obtaining subunit, configured to obtain the playback data of the target multimedia resource in response to detecting that there is the audio and video playback peripheral; and the resource playing subunit is configured to send the playback data to the audio and video playback peripheral, to cause the audio and video playback peripheral.

In an exemplary embodiment, a display range of the auxiliary interface is variable. In particular, the triggering unit includes: a reducing unit, configured to reduce a display range of the auxiliary interface relative to the main interface; a playing subunit, configured to play the target multimedia resource on the auxiliary interface after the display range is reduced based on the playback data.

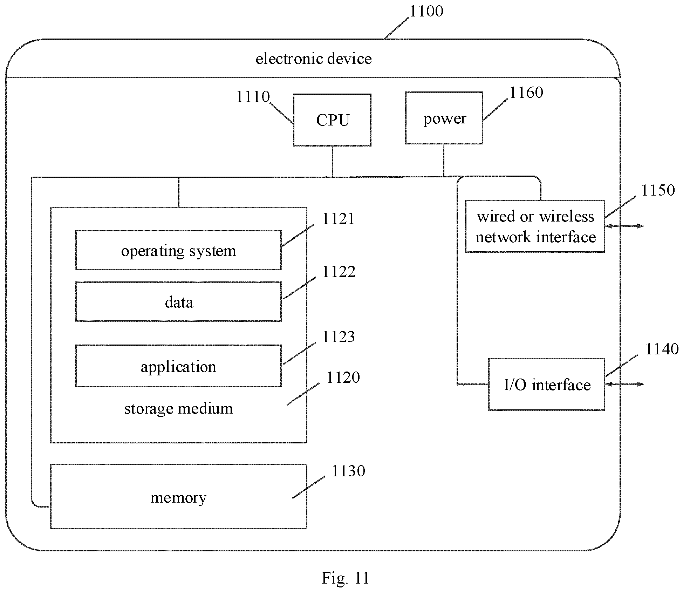

In an exemplary embodiment as shown in Fig. 11, the apparatus includes: an invoking unit 1003, configured to invoke a playback data display interface associated with the auxiliary interface, in which a dependence of the playback data display interface on an operating environment is lower than a dependence of the auxiliary interface on the operating environment; a second resource playing unit 1004, configured to play the target multimedia resource on the playback data display interface based on the playback data.

In an exemplary embodiment, when the number of the target multimedia resource messages is at least two, each of the target multimedia resource messages is displayed on the auxiliary interface in the form of a card component, and display items of each card include description information of the corresponding target multimedia resource and the first interactive operation control for the playback controlling; the apparatus also includes: a switching unit 1005, configured to switch the target multimedia resource message displayed in the auxiliary interface in response to a sliding operation on a card component list; in which, the card component list is obtained by arranging the card components corresponding to the target multimedia resource messages, and a sliding direction of the sliding operation is same as an arrangement direction of the card components.

In an exemplary embodiment, the apparatus also includes: a presenting unit 1006, configured to present a time selection interface for making an appointment reminder for a live broadcast corresponding to the target multimedia resource in response to a trigger operation of the third interactive operation control indicating the appointment reminder; a selecting unit 1007, configured to determine a selected time as a target time in response to triggering a selection operation on the time selection interface; a notification unit 1008, configured to receive a reminder notification for the live broadcast at the target time.

In an exemplary embodiment, the apparatus also includes: a candidate multimedia resource determining unit 1009, configured to determine candidate multimedia resources which have not been played from a local cache; a target multimedia resource determining unit 1010, configured to determine the target multimedia resource among the candidate multimedia resources according to multimedia resource preference information of the target object; a message generating unit 1011, configured to generate the target multimedia resource message using information corresponding to the target multimedia resource.

In an exemplary embodiment, the apparatus also includes: a message receiving unit 1012, configured to receive the target multimedia resource message sent by a server; in which, the target multimedia resource message is selected and sent by the server based on the identification information of the target object.

In an exemplary embodiment, the displaying unit 1001 includes: a first area displaying unit 1013, configured to display a cover image indicating the target multimedia resource in a first area of the auxiliary interface, in which the cover image is one of a static image and a dynamic image; a second area displaying unit 1014, configured to display the first interactive operation control for playback controlling in a second area of the auxiliary interface, and an overlapping unit, configured to control the first area and the second area at least partially overlapped in response to the an adjusted display transparency meeting a preset transparency threshold.

The specific operation manners for the respective modules in the apparatus described in the foregoing embodiments have been described in detail in the method embodiments, and detailed description will not be elaborate herein.

In an exemplary embodiment, there is also provided an electronic device, including a processor; a memory for storing instructions executable by the processor; in which the processor is configured to execute the instructions to implement the method of displaying multimedia resources as described in any of above-mentioned embodiments.

The electronic device may be a terminal, a server or a similar computing device. Taking the electronic device as a server as an example, Fig. 11 is a block diagram of an electronic device for implementing a method for displaying multimedia resources according to an exemplary embodiment. The electronic device 1000 may have relatively large differences due to different configurations or performances, and may include one or more central processing units (CPU) 1110 (the processor 1110 may include, but is not limited to, a microprocessor MCU or programmable logic A display device such as a device FPGA), a memory 1130 for storing data, and one or more storage media 1120 for storing application programs 1123 or data 1122 (for example, one or one storage device with a large amount of storage). The memory 1130 and the storage medium 1120 may be a temporary storage or a persistent storage. The program stored in the storage medium 1120 may include one or more modules, and each module may include a series of instruction operations on the electronic device. Furthermore, the central processing unit 1111 may be configured to communicate with the storage medium 1120, and execute a series of instruction operations in the storage medium 1120 on the electronic device 1100. The electronic device 1100 may also include one or more power supplies 1160, one or more wired or wireless network interfaces 1150, one or more input and output interfaces 1140, and/or one or more operating systems 1121, such as Windows ServerTM, Mac OS XTM, UnixTM, LinuxTM, FreeBSDTM, etc.

The input/output interface 1040 can be used to receive or send data via a network. The foregoing specific example of the network may include a wireless network provided by a communication provider of the electronic device 1000. In an example, the input/output interface 1040 includes a network interface controller (NIC), which can be connected to other network devices through a base station so as to communicate with the Internet. In an exemplary embodiment, the input/output interface 100 may be a radio frequency (RF) module, which is used to communicate with the Internet in a wireless manner.

Those of ordinary skill in the art can understand that the structure shown in Fig. 11 is only for illustration, and does not limit the structure of the above electronic device. For example, the electronic device 1100 may also include more or fewer components than those shown in Fig. 11, or have a different configuration from that shown in Fig. 11.

In an exemplary embodiment, there is also provided a computer-readable storage medium including instructions, such as a memory including instructions, which may be executed by the processor 1110 of the electronic device 1100 to complete the method for displaying multimedia resources described above. Alternatively, the computer-readable storage medium may be ROM, random access memory (RAM), CD-ROM, magnetic tape, floppy disk, optical data storage device, and the like.

In an exemplary embodiment, a computer program product is also provided. The computer program product includes computer instructions, and the computer program/instructions are stored in a computer-readable storage medium. The processor of the electronic device reads the computer program/instruction from the computer-readable storage medium, and the processor executes the computer program/instruction, so that the electronic device executes the method for displaying multimedia resource provided in any of the foregoing embodiments.

Those skilled in the art can understand that all or part of the processes in the above-mentioned embodiment methods can be implemented by instructing relevant hardware through a computer program. The computer program can be stored in a non-volatile computer readable storage medium. When the computer program is executed, it may include the procedures of the above-mentioned method embodiments. Any reference to memory, storage, database or other media used in the embodiments provided in this application may include non-volatile and/or volatile memory. Non-volatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchronous chain Channel (Synchlink) DRAM (SLDRAM), memory bus (Rambus) direct RAM (RDRAM), direct memory bus dynamic RAM (DRDRAM), and memory bus dynamic RAM (RDRAM), etc.

Those skilled in the art will easily achieve other embodiments of the disclosure after considering the description and practicing the invention disclosed herein. The disclosure is intended to cover any variations, uses, or adaptive changes of the disclosure. These variations, uses, or adaptive changes follow the general principles of the disclosure and include common knowledge or conventional technical means in the technical field not disclosed in the disclosure. The description and the embodiments are only regarded as exemplary, and the true scope and spirit of the disclosure are pointed out by the following claims.

## Claims

1. A method for displaying multimedia resources, comprising:
displaying (S201) an auxiliary interface in response to receiving a target multimedia resource message, wherein the auxiliary interface is independent from a main interface, and the auxiliary interface displays at least one of description information of a target multimedia resource, a first interactive operation control for playback controlling and a second interactive operation control for interactive feedback;
obtaining (S202) playback data of the target multimedia resource, and playing the target multimedia resource on the auxiliary interface based on the playback data, in response to a trigger operation on the first interactive operation control; and/or displaying interactive feedback information associated with the second interactive operation control on the auxiliary interface in response to a trigger operation on the second interactive operation control.

2. The method of claim 1, further comprising:
creating the first interactive operation control based on a first preset surface view control, wherein the first preset surface view control is embedded with a first object for caching related playback data; and
creating the second interactive operation control based on a second preset surface view control, wherein the second preset surface view control is embedded with a second object for caching related interaction feedback information.

3. The method of claim 1 or 2, comprising:
obtaining (S302) the playback data of the target multimedia resource in response to detecting that a preset playback permission is enabled.

4. The method of any of claims 1 to 3, comprising:
playing (S303) the target multimedia resource based on the playback data through a playback peripheral.

5. The method of any of claims 1 to 4, wherein a display range of the auxiliary interface is variable.

6. The method of any of claims 1 to 5, comprising:
invoking (S501) a playback data display interface associated with the auxiliary interface, wherein a dependence of the playback data display interface on an operating environment is lower than a dependence of the auxiliary interface on the operating environment;
playing (S502) the target multimedia resource on the playback data display interface based on the playback data.

7. The method of any of claims 1 to 6, wherein the auxiliary interface further displays a third interactive operation control indicating an appointment reminder, and the method further comprises:
presenting a time selection interface for making an appointment reminder for a live broadcast corresponding to the target multimedia resource in response to a trigger operation of the third interactive operation control indicating the appointment reminder;
determining a selected time as a target time in response to triggering a selection operation on the time selection interface;
receiving a reminder notification for the live broadcast at the target time.

8. The method of any of claims 1 to 7, comprising:
determining candidate multimedia resources which are not yet played from a local cache;
determining the target multimedia resource among the candidate multimedia resources according to multimedia resource preference information of the target object;
generating the target multimedia resource message using information corresponding to the target multimedia resource.

9. The method of any of claims 1 to 8, comprising:
receiving the target multimedia resource message sent by a server,
wherein the target multimedia resource message is selected and sent by the server based on identification information of a target object.

10. The method of any of claims 1 to 9, wherein displaying (S201) the auxiliary interface comprises:
displaying a cover image indicating the target multimedia resource in a first area of the auxiliary interface, wherein the cover image is one of a static image and a dynamic image;
displaying the first interactive operation control indicating playback controlling in a second area of the auxiliary interface, and adjusting a display transparency of the first interactive operation control;
wherein the first area and the second area are at least partially overlapped in response to the display transparency adjusted meeting a preset transparency threshold.

11. An apparatus for displaying multimedia resources, comprising:
a displaying unit (1001), configured to display an auxiliary interface in response to receiving a target multimedia resource message, wherein the auxiliary interface is independent from a main interface, and the auxiliary interface displays at least one of description information of a target multimedia resource, a first interactive operation control for playback controlling and a second interactive operation control for interactive feedback;
a triggering unit (1002), configured to obtain playback data of the target multimedia resource, and playing the target multimedia resource on the auxiliary interface based on the playback data, in response to a trigger operation on the first interactive operation control; and/or to display interactive feedback information associated with the second interactive operation control on the auxiliary interface in response to a trigger operation on the second interactive operation control.

12. The apparatus of claim 11, further comprising:
a first interactive operation control creation unit, configured to create the first interactive operation control based on a first preset surface view control, wherein the first preset surface view control is embedded with a first object for caching related playback data; and
a second interactive operation control creation unit, configured to create the second interaction operation control based on a second preset surface view control, wherein the second preset surface view control is embedded with a second object for caching related interaction feedback information.

13. An electronic device, comprising:
a processor;
a memory for storing instructions executable by the processor;
wherein, the processor is configured to execute the instructions to implement the method for displaying multimedia resources according to any one of claims 1 to 10.

14. A non-transitory computer-readable storage medium, wherein when instructions stored in the computer-readable storage medium are executed by a processor of an electronic device, the electronic device is caused to execute the method for displaying multimedia resources according to any one of claims 1 to 10.15. A computer program product with instructions stored thereon, wherein when the instructions are executed by a processor of an electronic device, the electronic device is caused to execute the method for displaying multimedia resources according to any one of claims 1 to 10.
